Europäisches Patentamt

European Patent Office

Office européen des brevets

(11) Veröffentlichungsnummer : **0 106 958**
**B1**

(12) # EUROPÄISCHE PATENTSCHRIFT

(45) Veröffentlichungstag der Patentschrift :
26.03.86

(21) Anmeldenummer : 83107872.0

(22) Anmeldetag : 09.08.83

(51) Int. Cl.⁴ : **H 02 K 44/06// G21C15/24**

(54) **Elektrodynamische Pumpe.**

(30) Priorität : 25.08.82 DE 3231601

(43) Veröffentlichungstag der Anmeldung :
02.05.84 Patentblatt 84/18

(45) Bekanntmachung des Hinweises auf die Patenterteilung : 26.03.86 Patentblatt 86/13

(84) Benannte Vertragsstaaten :
DE FR GB

(56) Entgegenhaltungen :
DE-A- 1 906 922
DE-C-   554 959
GB-A- 1 413 304
US-A- 2 786 416

(73) Patentinhaber : INTERATOM Gesellschaft mit beschränkter Haftung
Friedrich-Ebert-Strasse
D-5060 Bergisch Gladbach 1 (DE)

(72) Erfinder : Jansing, Walter, Dipl.-Ing.
Diakonissenweg 2b.
D-5060 Bergisch-Gladbach (DE)
Erfinder : Lauhoff, Theodor, Dipl.-Ing.
Enrico-Fermi-Strasse 2
D-5060 Bergisch-Gladbach (DE)

(74) Vertreter : Mehl, Ernst, Dipl.-Ing. et al
Postfach 22 01 76
D-8000 München 22 (DE)

## Beschreibung

Die vorliegende Erfindung betrifft eine elektromagnetische Pumpe für elektrisch leitende Flüssigkeiten nach dem Oberbegriff des ersten Anspruchs. Aus der GB-A-1 413 304 ist das Prinzip solcher elektromagnetischer Pumpen zum Bewegen einer elektrisch leitenden Flüssigkeit in einem Ringkanal durch magnetische Wanderfelder bereits bekannt. Außerdem sind eine große Anzahl von speziellen Ausführungen in der Literatur beschrieben.

Da die meisten elektrisch leitenden Flüssigkeiten Metallschmelzen sind, ist eines der Hauptprobleme bei der Konstruktion von solchen Pumpen die hohe auftretende Temperatur. Aber auch bei Metallen mit einem verhältnismäßig niedrigem Schmelzpunkt, beispielsweise Natrium, treten in den Spulen einer solchen Pumpe hohe Verlustleistungen auf, welche zu einer Überschreitung des Curie-Punktes in den magnetischen Materialien führen können. Die Kühlung solcher Pumpen ist daher ein zentrales Problem. Andererseits ist es aber auch unerwünscht, große Leistungen in ein Kühlsystem zu führen, wo sie nicht mehr genutzt werden können.

Aufgabe der vorliegenden Erfindung ist daher eine elektromagnetische Pumpe, insbesondere für große Förderleistungen, welche eine wirksame Kühlung der Spulen aufweist und auch in Verbindung mit einer einfachen Konstruktion des Mehrphasensystems die Möglichkeit bietet, die Verlustleistung der zu fördernden Flüssigkeit zuzuführen.

Zur Lösung dieser Aufgabe wird eine elektromagnetische Pumpe nach dem ersten Anspruch vorgeschlagen. Bei dieser Lösung sind nicht, wie sonst üblich, einzelne Ringspulen oder mehrere wendelförmige Phasenspulen um den Ringkanal angeordnet, sondern es existiert nur ein wendelförmig um den Ringkanal gewundener elektrischer Leiter, welcher ohne Unterbrechung durchlaufend ist. Trotz dieser Anordnung kann man jede einzelne Windung dieses Leiters als Spule ansehen, deren Enden lediglich mit den Enden der benachbarten Spulen elektrisch verbunden sind. Werden nach jeweils einem oder mehreren Umläufen Zuleitungen für die Einspeisung von Mehrphasen-Wechselströmen elektrisch gut leitend an der spiralförmigen Spule angebracht, so läßt sich diese Anordnung wie ein herkömmliches Spulensystem betreiben. Die Spulen bestehen nunmehr nur aus einer einzigen Windung, was zwar höhere Ströme zur Erzeugung der Magnetfelder erfordert, aber keine prinzipielle Umwälzung bedeutet.

Diese Anordnung hat sogar entscheidende Vorteile gegenüber den bisher bekannten. Die wendelförmige Spule kann nämlich aus einem von einer elektrisch leitenden Flüssigkeit durchströmbaren Rohr bestehen, wodurch ganz neue Möglichkeiten eröffnet werden. Einerseits kann die elektrisch leitende Flüssigkeit selbst einen großen Teil des Spulenstromes aufnehmen, andererseits kann sie die entstehende Ohm'sche Wärme abführen. Für den Fall, daß die wendelförmige Spule von der zu fördernden elektrisch leitenden Flüssigkeit durchströmt wird, kann die entstehende Ohm'sche Wärme ganz leicht dieser Flüssigkeit zugeführt werden.

Im Anspruch 2 wird vorgeschlagen, die Spulen aus einem Rohr von etwa rechteckigem Außenquerschnitt herzustellen, wobei eine Schmalseite dem Ringkanal zugewandt ist. Diese Ausführungsform ist für die bestehenden Platzverhältnisse besonders günstig, da der Zwischenraum zwischen den Spulen leicht mit magnetisch leitendem Material ausgefüllt werden kann. Dies kann beispielsweise durch die an sich bekannten Kammbleche aus magnetisch leitendem Material oder auch durch eine sonstige Anordnung von Transformatorenblechen in den Zwischenräumen geschehen.

Im Anspruch 3 wird eine besondere Ausgestaltung der Erfindung vorgeschlagen, bei der die Spulen aus einem Rohr bestehen, welches dem Ringkanal mit der zu pumpenden elektrisch leitenden Flüssigkeit parallel geschaltet ist. Diese Ausführungsform erfordert im Betrieb keinerlei Hilfseinrichtungen außer der Stromversorgung, da sich über einer Pumpe immer eine Druckdifferenz einstellt, welche dazu führt, daß in dem parallel geschalteten ringförmigen Rohr ein der Pumpenströmung entgegengerichteter Strom aufrecht erhalten wird. Auf diese Weise werden die Spulen beim Betrieb der Pumpe ständig gekühlt, bzw. der Flüssigmetallstrom in der Wendelförmigen Spule nimmt einen Teil der Ströme und der damit entstehenden Ohm'schen Wärme direkt auf.

Im Anspruch 4 wird eine besondere Ausgestaltung des Spulenrohres vorgeschlagen, welche bei besonders hohen Anforderungen, wie sie beispielsweise im Primärkreislauf eines Kernreaktors auftreten könnten, anwendbar ist. Danach besteht die Spule aus einem von einer elektrisch leitenden Flüssigkeit durchströmbaren Mehrschichten-Rohr, bei dem mindestens eine Schicht aus einem elektrisch gut leitenden Material besteht. Die elektrisch gut leitende Schicht kann einen großen Teil der Ströme aufnehmen, während die anderen Schichten einen direkten Kontakt der gut leitenden Schicht mit der Kühlflüssigkeit verhindern, was aufgrund der chemischen und physikalischen Eigenschaften mancher Flüssigkeiten (z. B. Natrium) nötig ist. Ein solches Mehrschichtenrohr wird beispielsweise in der DE-PS 20 46 548 beschreiben, wobei ein Kupferrohr außen und innen von einem Rohr aus austenitischem Stahl eingehüllt ist. Diese Ausführungsform eignet sich besonders für erfindungsgemäße Pumpen zum Einsatz bei flüssigem Natrium. Ein Mehrschichtenrohr hat gegenüber einem einfachen Spulenrohr weitere Vorteile, die am Beispiel der Förderung von flüssigem Natrium kurz erläutert werden sollen : Bei einem Spulenrohr aus austenitischem Stahl, in welchem flüssiges Natrium fließt, wird der größte Teil des Stromes von dem flüssigen Natrium übernommen, da das Rohr selbst nicht besonders gut leitet. Dieser zunächst wünschenswerte Effekt kann beim Auftreten von größeren Gasblasen in dem Spulenrohr jedoch dazu führen, daß die Rohrwand kurzzeitig sehr große Ströme übernehmen muß, was zum Schmelzen führen könnte. Durch eine elektrisch gut leitende Schicht, welche in solchen Fällen kurzzeitig den ganzen Strom übernehmen kann, wird dieses Problem vermieden. Da beispielsweise Kupfer zusätzlich ein hervorragender Wärmeleiter ist und eine große Wärmekapazität besitzt, können Gasblasen bei einem Mehrschichtenrohr keinen Schaden mehr anrichten.

Im Anspruch 5 wird eine weitere Ausgestaltungsmöglichkeit für das Spulenrohr angegeben. Es ist zwar vorteilhaft, einen großen Teil der Spulenströme gleich in der elektrisch leitenden Flüssigkeit im Inneren des Spulenrohres fließen zu lassen, jedoch ist dies nicht unbedingt erforderlich. Die dadurch erzielbare Materialeinsparung spielt bei den sonstigen Kosten einer solchen Pumpe nur eine nebengeordnete Rolle. Entscheidend ist die Möglichkeit, die Spulen ohne großen Aufwand zu kühlen. Dazu braucht der Innenquerschnitt des Spulenrohres nicht groß zu sein, wie dies für die Aufnahme des ganzen Stromes nötig wäre, sondern es muß lediglich eine genügende Ableitung der Wärme durch die elektrisch leitende Flüssigkeit sichergestellt werden. Dazu wird im Anspruch 5 vorgeschlagen, die Spule aus einem Rohr mit rechteckigem Außenquerschnitt und einem ungefähr runden Innenquerschnitt herzustellen.

Im Anspruch 6 wird in weiterer Ausgestaltung vorgeschlagen, daß die Spule aus einem Rohr besteht, welches außen von einem elektrisch gut leitenden Material vorzugsweise Kupfer, umgeben ist und zwar so, daß der Außenquerschnitt etwa rechteckig ist. In diesem Falle hat die im Inneren des Rohres fließende elektrisch leitende Flüssigkeit fast nur noch Kühlfunktion und trägt zur Leitfähigkeit des Rohres nur noch wenig bei.

Im Anspruch 7 wird zusätzlich vorgeschlagen, das Innenrohr der Spule unsymmetrisch in dem umgebenden Material unterzubringen und zwar vorzugsweise zu der dem Ringkanal abgewandten Seite verschoben. Theoretische Überlegungen zeigen, daß die Ausnutzung des Spulenstromes zur Erzeugung eines magnetischen Feldes im Ringkanal umso besser ist, je näher an dem Ringkanal der Hauptanteil des Stromes fließt. Gemäß diesen Überlegungen ist es sinnvoll, den elektrisch besser leitenden Teil des Spulenquerschnitts nahe dem Ringkanal anzuordnen, während die Kühlung weiter außen erfolgen kann.

Im Anspruch 8 wird in spezieller Ausgestaltung der Erfindung für flüssiges Natrium vorgeschlagen, daß das Innenrohr der Spule aus austenitischem Stahl besteht.

Ausführungsbeispiele der Erfindung sind in der Zeichnung dargestellt und zwar zeigen

Figur 1 einen Längsschnitt durch eine erfindungsgemäße Pumpe,

Figur 2 einen vergrößerten Ausschnitt aus Fig. 1 mit rechteckigen Spulenrohren,

Figur 3 einen Ausschnitt aus Fig. 1 mit Mehrschichtenrohren als Spulen,

Figur 4 eine weitere Ausgestaltungsmöglichkeit für den Querschnitt der Spulenrohre,

Figur 5 eine teilweise schematische Darstellung der elektrischen Schaltung und Anschlüsse der Spulenwindungen und

Figur 6 einen Querschnitt durch einen 12-Phasen-Transformator, der besonders geeignet ist zur Stromversorgung einer erfindungsgemäßen Pumpe.

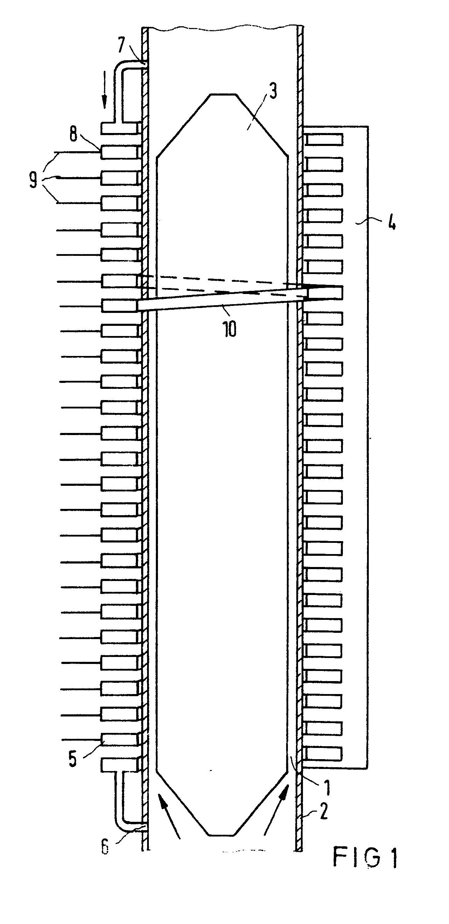

In Fig. 1 ist schematisch eine gesamte erfindungsgemäße Pumpenanordnung dargestellt. Ein Ringkanal 1, der aus einem Leitungsrohr 2 und einem in dem Leitungsrohr angeordneten ferromagnetischen Verdrängungskörper 3 besteht, ist außen von einem wendelförmig gewundenen Rohr 5 umgeben, wobei in die Zwischenräume des Rohres magnetisch leitende Materialien, insbesondere kammförmige Bleche 4, eingesetzt sind. Das Rohr 5 ist von rechteckigem Querschnitt und dabei so um den Ringkanal gewickelt, daß eine Schmalseite des rechteckigen Querschnittes dem Ringkanal zugewandt ist. Die Enden 6, 7 der Rohrleitung 5 münden vor bzw. hinter dem Ringkanal 1 in die Hauptleitung 2. An jeder Windung des Rechteckrohres ist eine elektrische Zuleitung 9 mit einer gut leitenden Verbindungsstelle 8 befestigt. Der wendelförmige Verlauf 10 der Rohrleitung um den Ringkanal ist schematisch angedeutet. Bei einer Förderung der elektrisch leitenden Flüssigkeit von unten nach oben, wie dies durch Pfeile in der Zeichnung angedeutet ist, besteht oberhalb des Ringkanals ein höherer Druck als unterhalb. Daher strömt elektrisch leitende Flüssigkeit durch die Spule von oben nach unten, so daß ständig ein kühlender Strom der elektrisch leitenden Flüssigkeit in der Spule vorhanden ist. Da die Flüssigkeit selbst gut leitet, übernimmt sie einen großen Teil der in den Windungen fließenden Stöme, wodurch sie sich erwärmt. Diese Wärme kann jedoch mit der vorgeschlagenen Anordnung gut abgeführt werden und geht außerdem nicht verloren, sondern wird dem Flüssigmetallkreislauf zugeführt.

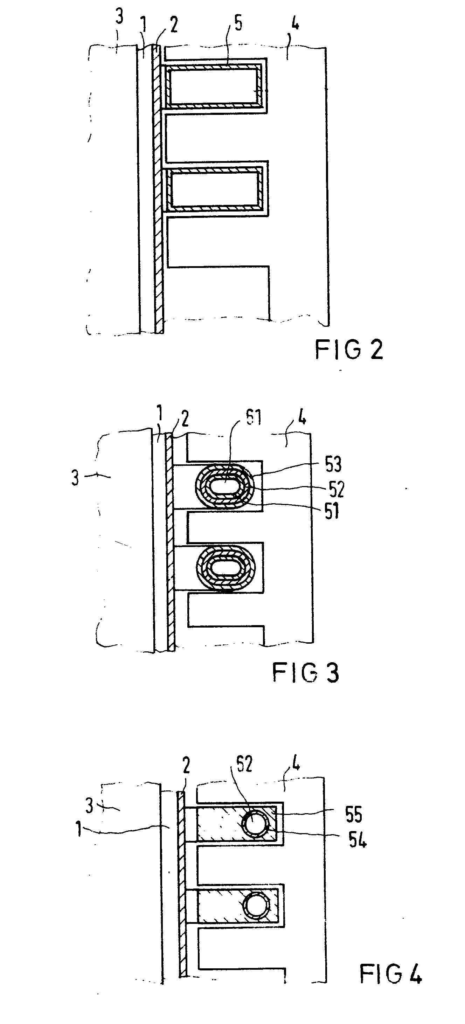

In Fig. 2 wird ein Ausschnitt der Fig. 1 im Detail dargestellt, wobei die Bezugszeichen gleich geblieben sind. Die Spulenrohrleitung 5, mit rechteckigem Querschnitt ermöglicht in ihrem Inneren einen Flüssigmetallstrom von großem Querschnitt, der den größten Teil des in der Spule fließenden Stromes und die entstehende Wärme aufnehmen kann.

Fig. 3 zeigt den gleichen Ausschnitt wie Fig. 2, jedoch diesmal unter Verwendung eines Mehrschichtenrohres für die Spule. Dabei kann das Mehrschichtenrohr einen runden Querschnitt oder aber auch einen ovalen Querschnitt, der sich den Raumerfordernissen besser anpassen läßt,

aufweisen. Das Mehrschichtenrohr besteht aus einer inneren Schicht 51, die beispielsweise für flüssiges Natrium austenitischer Stahl sein sollte, einer gut leitenden Zwischenschicht 52, die beispielsweise aus Kupfer bestehen kann, und möglicherweise einer weiteren Außenschutzschicht, welche wiederum austenitischer Stahl sein kann. Im Inneren bleibt nunmehr ein kleinerer Querschnitt 61 für das Kühlmittel bzw. Flüssigmetall übrig. Dieser kleinere Querschnitt kann zwar nicht mehr den ganzen Strom aufnehmen, der nunmehr auch teilweise von der gut leitenden Schicht 52 übernommen wird, jedoch ist eine gute Kühlung immer noch gewährleistet.

In Fig. 4 ist eine weitere Ausgestaltungsmöglichkeit des Spulenrohres dargestellt, bei der ein rundes Innenrohr von einem gut leitenden Material umkleidet ist, welches einen etwa rechteckigen Außenquerschnitt aufweist. Als besonders günstig erweist sich dabei eine kleine Unsymmetrie der Lage des Innenrohres, welche bewirkt, daß der größte Teil des in der Spule fließenden Stromes nahe am Ringkanal 1 verläuft. Das in seinem Inneren 62 von elektrisch leitender Flüssigkeit durchflossene Rohr 54 kann beispielsweise für flüssiges Natrium wiederum aus austenitischem Stahl bestehen, während das Umgebungsmaterial 55 beispielsweise Kupfer sein kann.

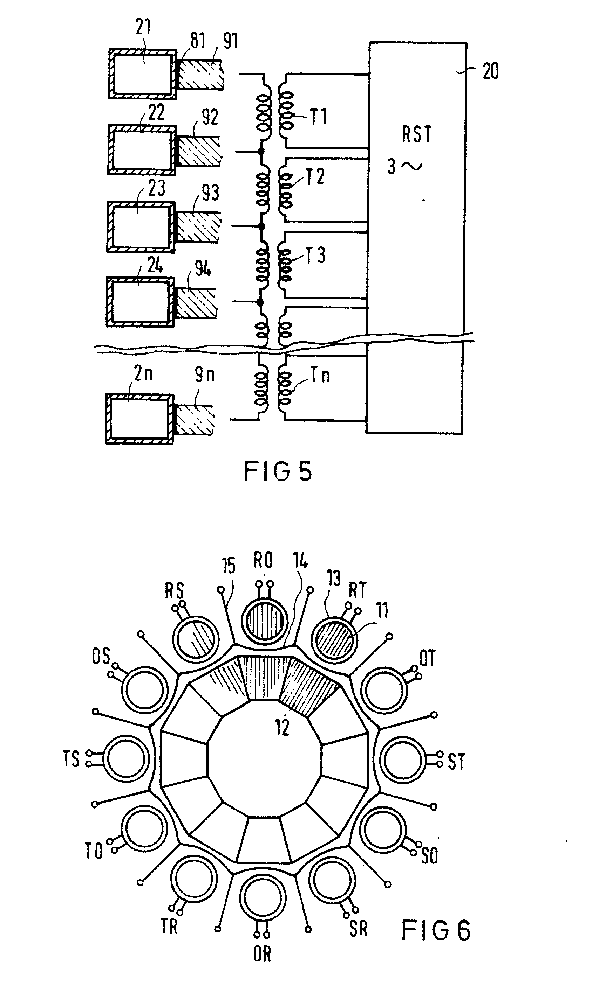

In Fig. 5 wird, teilweise als Schaltbild und teilweise als Längsschnittzeichnung durch die wendelförmige Spule, die prinzipielle Schaltung der erfindungsgemäßen Pumpe dargestellt. Im Grunde genommen unterscheidet sich die Anordnung nicht von bisherigen Schaltungen für elektromagnetische Pumpen mit mehreren einzelnen Spulen. Jede Windung der wendelförmigen Spule kann für sich als einzelne Spule betrachtet werden, so daß sich ein Spulensystem ergibt, welches mit Mehrphasen-Wechselströmen beaufschlagt werden kann. Der wesentliche Unterschied besteht nur darin, daß beim Vorhandensein nur einer Windung sehr viel höhere Ströme zur Erzeugung der nötigen Magnetfelder eingespeist werden müssen.

Eine weitere Besonderheit der Schaltung besteht darin, daß der Anfang der ersten Spule und das Ende der letzten Spule wegen der Kühlanschlüsse praktisch verbunden sind, die Spulen sind also kreisförmig zusammengeschaltet und in einem Punkt geerdet. Diese Tatsache stört nicht, wenn die Sekundärspulen des Transformators ebenfalls zu einem geschlossenen Sechseck oder Zwölfeck bzw. der entsprechenden Sternschaltung verschaltet sind. An die einzelnen Windungen 21, 22, 23, 24, 2n, der wendelförmigen Spule müssen daher gut leitende massive Zuleitungen 91, 92, 93, 94, 9n mit elektrisch gut leitenden Verbindungen 81 angebracht werden. Bei den notwendigen Querschnitten der wendelförmigen Rohrleitung kommt man bei Wechselstromfrequenzen von 50 Hertz für die zu erzeugenden Wanderfelder schon in den Grenzbereich bezüglich der Eindringtiefe der in den Spulen fließenden Ströme.

Die Prinzipielle Versorgung der einzelnen Spulenwindungen mit Mehrphasen-Wechselstrom aus einer Mehrphasenwechselstromquelle 20 erfolgt über ein Transformatorsystem T1, T2, T3, Tn, wobei jeder Phase ein Transformator zugeordnet ist, dessen Sekundärseite mit mindestens einer Windung der wendelförmigen Spule verbunden ist. So wird die Windung 21, 22 der Rohrleitung vom Transformator T1 versorgt, die Windung 22, 23 vom Transformator T2 und die Windung 23, 24 vom Transformator T3. Die Ströme in den Transformatoren sind jeweils gegeneinander phasenverschoben, wodurch auch die Magnetfelder phasenverschoben sind und dadurch die nötigen Wanderfelder entstehen. Die in den Spulenwindungen fließenden Ströme brauchen nicht unbedingt in voller Größe durch die Zuleitung zugeführt zu werden, da sich je nach Phasenlage einzelne Ströme in den Zuleitungen gegenseitig aufheben. Dies ist ein Vorteil der beschriebenen Anordnung, der sich aus der neuartigen Anordnung des Spulensystems ergibt. Je nach den Anforderungen an die Pumpe kann das Spulensystem mit 3, 6 oder 12 Phasen betrieben werden. Die notwendigen Schaltungen sind von anderen Pumpen bekannt.

In Fig. 6 wird eine ganz spezielle Transformatoranordnung zur Versorgung einer erfindungsgemäßen Pumpe mit 12-Phasen-Wechselstrom dargestellt. Dieser Transformator besteht aus zwölf kreisförmig aneinandergrenzenden einzelnen magnetischen Kreisen, von denen jeder eine Primär- und eine Sekundärspule enthält. Um jeden runden, lamellierten Eisenkern 11 mit seinem entsprechenden magnetischen Rückschlußkreis 12 ist eine Primärspule 13 gewickelt. Die so vorhandenen zwölf Primärspulen werden aus einer 3-Phasen-Wechselstromquelle, deren Phasen mit R, S und T bezeichnet sind, bzw. deren Mittelpunktsleiter versorgt. An jeder Primärspule ist angegeben, an welche Phasen und in welcher Polung sie angeschlossen werden. Die Sekundärspule 14 jedes Transformators besteht im vorliegenden Ausführungsbeispiel nur aus einer Windung und benachbarte Sekundärspulen sind jeweils miteinander verbunden, so daß die Sekundärkreise der beschriebenen Transformatoranordnung genau der Schaltung der wendelförmigen Spule an der Pumpe entsprechen. Zu jeder Windung der Pumpe führt eine der Zuleitungen 15. Die kreisförmige Schaltung des Transformators ist vorteilhaft für die Versorgung einer erfindungsgemäßen Pumpe, da mit dieser Anordnung die vorgegebenen Bedingungen gut erfüllt werden können.

Um einen Eindruck von der Größenordnung der beispielsweise für den Primärkreis eines großen natriumgekühlten Kernreaktors notwendigen Transformatoranordnung zu geben, seien im folgenden, nur als Beispiel, einige Maße angegeben:

Der Eisenkern 1 hat einen Durchmesser von ungefähr 160 mm, die Primärwicklungen bestehen aus 44 Windungen für 132 Ampere, sofern sie an eine Phase und den Mittelpunkt angeschlossen sind bzw. aus 76 Windungen für 76 Ampere, sofern sie an zwei Phasen angeschlossen sind. Die umlaufende Sekundärwicklung 14 besteht aus einer Kupferschiene von 200 × 15 mm, die für 5 800 Ampere ausgelegt ist. Die Anschlüsse 15 erfolgen über jeweils drei Kupferschienen des Querschnitts 60 × 10 mm für 1 000 Ampere.

Wegen der materialaufwendigen Zuleitungen sollte der Transformator in der Nähe der Pumpe angeordnet werden, um Ohm'sche Verluste möglichst gering zu halten.

Die erfindungsgemäße Pumpe kann insbesondere für große Fördermengen, beispielsweise im Primärkreislauf eines natriumgekühlten Kernreaktors eingesetzt werden und bietet die Möglichkeit, den Wirkungsgrad zu vergrößern und die Verluste klein zu halten.

**Patentansprüche**

1. Elektromagnetische Pumpe für elektrisch leitende Flüssigkeiten, wobei um einen von der elektrisch leitenden Flüssigkeit durchströmbaren Ringkanal (1) außen wendelförmige Spulen (5) gewickelt sind, welche mit den Strömen eines Mehrphasen-Wechselstromes beaufschlagbar sind, und wobei in den Spulenzwischenräumen magnetisch leitendes Material (4) angeordnet ist, gekennzeichnet durch folgende Merkmale :

a) Die Spulen (5) bestehen aus einem einzigen ohne Unterbrechung wendelförmig um den Ringkanal gewundenen elektrischen Leiter oder einem wendelförmig um den Kanal gewundenen und von einer elektrisch leitenden Flüssigkeit durchströmbaren Rohr.

b) Die Zuleitungen (9) für die Einspeisung der Mehrphasen-Wechselströme sind nach jeweils einem oder mehreren Umläufen des Leiters oder Rohres mit der wendelförmigen Spule (5) elektrisch gut leitend verbunden (8).

2. Elektromagnetische Pumpe nach Anspruch 1, gekennzeichnet durch folgendes Merkmal :

Die Spulen (5) bestehen aus einem Rohr von etwa rechteckigem Außenquerschnitt, wobei eine Schmalseite dem Ringkanal zugewandt ist.

3. Elektromagnetische Pumpe nach Anspruch 1 oder 2, gekennzeichnet durch folgendes Merkmal :

Die Spulen bestehen aus einem Rohr (5) welches dem Ringkanal (2) mit der zu pumpenden elektrisch leitenden Flüssigkeit parallel geschaltet ist.

4. Elektromagnetische Pumpe nach einem der vorhergehenden Ansprüche, gekennzeichnet durch folgendes Merkmal :

Die Spule besteht aus einem von einer elektrisch leitenden Flüssigkeit durchströmbaren Mehrschichtenrohr (51, 52, 53), bei dem mindestens eine Schicht aus einem elektrisch gut leitenden Material ist.

5. Elektromagnetische Pumpe nach einem der vorhergehenden Ansprüche, gekennzeichnet durch folgendes Merkmal :

Die Spule ist ein Rohr mit einem rechteckigen Außenquerschnitt und einem ungefähr runden Innenquerschnitt.

6. Elektromagnetische Pumpe nach Anspruch 5, gekennzeichnet durch folgendes Merkmal :

Die Spule besteht aus einem Rohr (54), welches außen von einem elektrisch gut leitenden Material (55), vorzugsweise Kupfer, umgeben ist, und zwar so, daß der Außenquerschnitt etwa rechteckig ist.

7. Elektromagnetische Pumpe nach Anspruch 6, gekennzeichnet durch folgendes Merkmal :

Das Innenrohr (54) der Spule liegt unsymmetrisch in dem umgebenden Material (55) und zwar vorzugsweise zu der dem Ringkanal (1) abgewandten Seite verschoben.

8. Elektromagnetische Pumpe nach einem der vorhergehenden Ansprüche, insbesondere für flüssiges Natrium, gekennzeichnet durch folgendes Merkmal :

Das Innenrohr der Spule besteht aus austenitischem Stahl.

**Claims**

1. An electro-magnetic pump for electrically-conductive liquids, where helical coils (5) are wound around the exterior of an annular channel (1) through which the electrically-conductive liquid can flow, where said coils can be acted upon by the currents of a multi-phase alternating current, and where magnetically-conductive material (4) is arranged in the interspaces between the coil-turns, characterised by the following features :

a) the coils (5) consist of one single electrical conductor, wound in helical fashion without interruption around the annular channel, or of a tube which is wound in helical fashion around the channel and through which an electrically-conductive liquid can flow,

b) after one or more revolutions of the conductor or tube, the supply lines (9) which serve to feed the multi-phase alternating currents are electrically connected (8) to the helical coil (5) in low-ohmic fashion.

2. An electro-magnetic pump as claimed in Claim 1, characterised by the following feature :

the coils (5) consist of a tube of approximately rectangular outer cross-section, where one narrow side faces towards the annular channel.

3. An electro-magnetic pump as claimed in Claim 1 or 2, characterised by the following feature :

the coils consist of a tube (5) connected in parallel to the annular channel (2) containing the electrically-conductive liquid which is to be pumped.

4. An electro-magnetic pump as claimed in one of the preceding Claims, characterised by the following feature :

the coil consists of a multi-layer tube (51, 52, 53) through which an electrically-conductive liquid can flow and in which at least one layer consists of an electrically highly conductive material.

5. An electro-magnetic pump as claimed in one of the preceding Claims, characterised by the following feature :

the coil is a tube of rectangular outer cross-section and an approximately round inner cross-section.

6. An electro-magnetic pump as claimed in Claim 5, characterised by the following feature :

the coil consists of a tube (54) externally surrounded by an electrically highly conductive material (55), preferably copper, in such manner that the external cross-section is approximately rectangular.

7. An electro-magnetic pump as claimed in Claim 6, characterised by the following feature :

the internal tube (54) of the coil is arranged asymmetrically in the surrounding material (55), preferably displaced to the side facing away from the annular channel (1).

8. An electro-magnetic pump as claimed in one of the preceding Claims, in particular for liquid sodium, characterised by the following feature :

the inner tube of the coil consists of austenitic steel.

**Revendications**

1. Pompe électromagnétique pour des liquides conducteurs de l'électricité, des bobines (5) hélicoïdales extérieures étant enroulées sur un canal annulaire (1) susceptible d'être parcouru par le liquide conducteur de l'électricité et pouvant être alimentées par les courants d'un courant alternatif polyphasé, un matériau (4) magnétiquement conducteur étant disposé dans les interstices des bobines, remarquable par les caractéristiques suivantes :

a) Les bobines (5) sont constituées d'un unique conducteur électrique enroulé en hélice sans interruption sur le canal annulaire ou d'un tube enroulé en hélice sur le canal et susceptible d'être parcouru par un liquide conducteur de l'électricité.

b) Les conducteurs d'amenée (9) pour l'alimentation en des courants alternatifs polyphasés sont, après un tour ou plusieurs tours du conducteur ou du tube, reliés (8), et d'une manière conduisant bien l'électricité, à la bobine (5) hélicoïdale.

2. Pompe électromagnétique suivant la revendication 1, remarquable par la caractéristique suivante :

Les bobines (5) sont constituées d'un tube de section transversale extérieur à peu près rectangulaire, dont un petit côté est tourné vers le canal annulaire.

3. Pompe électromagnétique suivant la revendication 1 ou 2, remarquable par la caractéristique suivante :

Les bobines sont constituées d'un tube (5) qui est monté en parallèle avec le canal annulaire (2) contenant le liquide conducteur de l'électricité à pomper.

4. Pompe électromagnétique suivant l'une des revendications précédentes, remarquables par la caractéristique suivante :

La bobine est constituée d'un tube à plusieurs couches (51, 52, 53), susceptible d'être parcouru par un liquide conducteur de l'électricité, et dans lequel au moins une couche est en une matière bonne conductrice de l'électricité.

5. Pompe électromagnétique suivant l'une des revendications précédentes, remarquables par la caractéristique suivante :

La bobine est un tube à section transversale extérieure rectangulaire et à section transversale intérieure sensiblement ronde.

6. Pompe électromagnétique suivant la revendication 5, remarquable par la caractéristique suivante :

La bobine est constituée d'un tube (54) qui est entouré extérieurement d'une matière (55) bonne conductrice de l'électricité, de préférence de cuivre, et cela de façon à ce que la section transversale extérieure soit à peu près rectangulaire.

7. Pompe électromagnétique suivant la revendication 6, remarquable par la caractéristique suivante :

Le tube intérieur (54) de la bobine s'étend dissymétriquement dans la matière (55) qui l'entoure, en étant décalé, de préférence vers le côté éloigné du canal annulaire (1).

8. Pompe électromagnétique suivant l'une des revendications précédentes, notamment pour du sodium liquide, remarquable par la caractéristique suivante :

Le tube intérieur de la bobine est en acier austénitique.

FIG 1

FIG 2

FIG 3

FIG 4

2

FIG 5

FIG 6